# FASCICULE DE BREVET EUROPEEN

(11) **EP 2 729 793 B1**
(45) Date de publication et mention de la délivrance du brevet: **17.06.2015**
(21) Numéro de dépôt: 12738554.0
(22) Date de dépôt: 03.07.2012
(51) Int. Cl.: G01N 29/22, G01N 29/44, G01N 29/26

(54) **PROCEDE POUR CONTROLER DES STRUCTURES PAR RETOURNEMENT TEMPOREL**
VERFAHREN ZUR ÜBERPRÜFUNG VON STRUKTUREN MITTELS ZEITUMKEHR
METHOD FOR CHECKING STRUCTURES BY TIME REVERSAL

(30) Priorité: 08.07.2011 FR 1156243
(43) Date de publication de la demande: 14.05.2014
(73) Titulaire: 01 dB - Metravib, 69760 Limonest (FR)
(72) Inventeur: VOUAGNER, Pascal, F-69250 Fleurieu Sur Saone (FR); GUYADER, Jean-Louis, F-01800 Charnoz Sur Ain (FR); CHARVIN, Jacques, F-69270 Fontaines Saint-Martin (FR)
(74) Mandataire: Thibault, Jean-Marc
(86) Numéro de dépôt international: PCT/FR2012/051550
(87) Numéro de publication internationale: WO 2013/007919

(56) Documents cités:
- FR-A1- 2 696 573
- GRANGER S ET AL: "Monitoring of cracking and healing in an ultra high performance cementitious material using the time reversal technique", CEMENT AND CONCRETE RESEARCH, PERGAMON PRESS, ELMSFORD, NY, US, vol. 39, no. 4, 1 avril 2009 (2009-04-01), pages 296-302, XP026027851, ISSN: 0008-8846, DOI: 10.1016/J.CEMCONRES.2009.01.004 [extrait le 2009-02-03]
- AMELIA BUERKLE ET AL: "Non-Destructive Evaluation of Elastic Targets Using Acousto-Electromagnetic Wave Interaction and Time Reversal Focusing", IEEE TRANSACTIONS ON ANTENNAS AND PROPAGATION, IEEE SERVICE CENTER, PISCATAWAY, NJ, US, vol. 57, no. 11, 1 novembre 2009 (2009-11-01), pages 3628-3637, XP011276274, ISSN: 0018-926X, DOI: 10.1109/TAP.2009.2031903
- FINK M: "TIME REVERSAL OF ULTRASONIC FIELDS-. \PART I: BASIC PRINCIPLES", IEEE TRANSACTIONS ON ULTRASONICS, FERROELECTRICS AND FREQUENCY CONTROL, IEEE, US, vol. 39, no. 5, 1 septembre 1992 (1992-09-01), pages 555-566, XP000306730, ISSN: 0885-3010, DOI: 10.1109/58.156174

## Description

L'objet de l'invention concerne le domaine technique de la surveillance et du contrôle par ondes vibratoires, de la santé ou de l'intégrité de structures mécaniques au sens général.

Par structure mécanique, il doit être compris les structures solides aptes à être contrôlées par ondes vibratoires relevant par exemple du secteur du nucléaire, plus généralement de l'énergie, du transport ferroviaire (ouvrages d'art, tels que ponts...) ou maritime (structure des navires), de l'aéronautique pour le contrôle des aérostructures.

L'objet de l'invention trouve une application particulièrement avantageuse pour détecter et localiser des défauts locaux (tels que fissures ou ruptures localisées) ou des changements d'états locaux de structures mécaniques (des ouvrages d'art par exemple) apparaissant au cours de leur période d'utilisation.

L'objet de l'invention trouve une autre application particulièrement avantageuse pour la détection et la localisation de défauts présents dans des structures mécaniques au terme de leur procédé de fabrication.

Dans l'état de la technique, il est connu de nombreux dispositifs de contrôle de pièces par ultrasons fonctionnant en transmission ou en réflexion et mettant en oeuvre comme source et comme récepteur, un réseau de transducteurs.

Une difficulté majeure naît du fait que l'écho de réflexion sur l'interface d'entrée de la structure à contrôler est beaucoup plus intense que les échos éventuels provenant des défauts de sorte que cet écho d'interface masque les échos à identifier. Ce problème est encore aggravé lorsque la pièce contrôlée présente une forme complexe et/ou une structure hétérogène.

Pour tenter de remédier à cet inconvénient, le brevet FR 2 683 323 propose une technique permettant de limiter l'impact de l'écho principal lié à l'interface transducteur/pièce, en mettant en oeuvre une technique d'amplification ultrasonore à retournement temporel décrite dans le document EP-A-0 383 650. Selon cette technique, il est prévu dans une première phase d'illuminer la zone à étudier à partir d'un ou de plusieurs transducteurs et à enregistrer les échos provenant de la pièce. Dans une deuxième phase, les signaux reçus sont réémis après avoir inversé leur répartition temporelle et éventuellement leur forme. Ainsi, les signaux reçus en dernier sont renvoyés en premier. Dans le même sens, le brevet FR 2 696 573 propose pour repérer des défauts, une technique de retournement temporel reposant sur la réémission successive des échos mesurés avec un ensemble de transducteurs en vue de mettre en évidence le réflecteur le plus important. La publication « Granger S et al : « Monitoring of cracking and healing in an ultra high performance cementitious material using the time reversal technique » » XP 0 260 378 51 décrit une méhode reposant sur le retournement temporel d'ondes ultrasonores consistant à analyser la variation, engendrée par l'apparition d'un défaut, du signal focalisé au point d'émission initial. Cette analyse est réalisée à partir d'un transducteur situé au point focal supposé être proche de la zone d'apparition du défaut.

Quelle que soit la qualité des techniques de traitement du signal mis en oeuvre, les techniques connues de détection ou de localisation de défauts reposant sur la réémission amplifiée d'échos mesurés sur une structure restent sujettes aux problèmes de la complexité de la plupart des structures à étudier. En effet, l'écho associé aux défauts recherchés apparaît fréquemment noyé au milieu des échos multiples créés par les singularités de la structure même étudiée. De plus, certaines de ces techniques nécessitent d'implanter les transducteurs, à proximité des zones d'apparition des défauts, ce qui représente un problème parfois pour accéder à de telles zones on impose un ratio élevé entre le nombre de transducteurs utilisés et le nombre de zones à surveiller.

La présente invention vise à remédier aux inconvénients de l'art antérieur en proposant une nouvelle technique relativement simple pour détecter par ondes vibratoires, des défauts apparaissant dans des structures complexes hétérogènes et étendues.

Un autre objet de l'invention est de proposer une technique de contrôle permettant de détecter des défauts avec un faible ratio entre le nombre de transducteurs et le élevé de zones à surveiller dont au moins certaines sont difficiles d'accès

Pour atteindre un tel objectif, l'invention concerne un procédé de contrôle non destructif de structures mécaniques par ondes vibratoires, en vue de déceler des changements d'états et/ou de défauts locaux.

Selon l'invention, le procédé comporte :
- une première phase d'apprentissage dans laquelle :
   - on définit une zone d'inspection d'une structure mécanique à contrôler,
   - on injecte une excitation vibratoire transitoire dans la zone d'inspection,
   - on capte en différents endroits de la zone d'inspection de la structure mécanique, les signaux reçus à la suite de l'injection de l'excitation vibratoire transitoire,
   - on retourne temporellement les signaux reçus, et on mémorise les signaux retournés temporellement afin de constituer des signaux d'excitation de référence,
- une seconde phase d'apprentissage dans laquelle :
   - on émet simultanément, les signaux d'excitation de référence en vue d'assurer leur focalisation dans la zone d'inspection,
   - on capte en différents endroits de la structure mécanique, les signaux divergents obtenus après la focalisation des signaux d'excitation de référence et on mémorise lesdits signaux divergents afin de constituer des signaux de réponse de référence,
- une phase de contrôle de la structure mécanique dans laquelle :
   - on émet les signaux d'excitation de référence en vue d'assurer leur focalisation dans la zone d'inspection de la structure mécanique,
   - on capte les signaux divergents obtenus après la focalisation des signaux d'excitation de référence,
   - on compare les signaux divergents avec les signaux de réponse de référence afin de déceler la présence ou non de changements d'états et/ou de défauts locaux dans la zone d'inspection de la structure mécanique.

De plus, le procédé selon l'invention peut présenter en outre en combinaison au moins l'une et/ou l'autre des caractéristiques additionnelles suivantes :
- utiliser les mêmes structures mécaniques à contrôler lors des phases d'apprentissage et de contrôle,
- pour la phase de contrôle, à réémettre dans structure mécanique à contrôler, de manière périodique, les signaux d'excitation de référence,
- pour les phases d'apprentissage, à utiliser une structure mécanique de référence exempte de changements d'états et/ou de défauts locaux, analogue aux structures mécaniques à contrôler lors de la phase de contrôle,
- renouveler la première phase d'apprentissage, pour différentes zones de la structure mécanique, de manière à constituer différents jeux de signaux d'excitation de référence correspondant chacun à une zone d'inspection,
- comparer par intercorrélation et par moyenne, les signaux divergents avec les signaux de réponse de référence,
- comparer les signaux divergents avec les signaux de réponse de référence en calculant la norme de la différence entre ces signaux,
- émettre les signaux d'excitation de référence et à capter les signaux divergents à l'aide des mêmes transducteurs,
- réaliser un impact mécanique en tant qu'excitation vibratoire transitoire,
- injecter une excitation vibratoire transitoire à l'aide d'un transducteur placé temporairement dans la zone d'inspection,
- appliquer un signal de type ondelette, au transducteur placé de façon temporaire dans la zone d'inspection.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est un schéma fonctionnel illustrant un exemple de réalisation d'un dispositif pour la mise en oeuvre du procédé de détection conforme à l'invention.
La **Figure 2** illustre de manière schématique le cheminement des signaux dans une zone d'inspection d'une structure, lors d'une première phase d'apprentissage du procédé conforme à l'invention.
La **Figure 3** est un exemple de la forme en fonction du temps t (ms), d'une excitation vibratoire transitoire mise en oeuvre dans la première phase d'apprentissage du procédé conforme à l'invention.
La **Figure 4** illustre un exemple de la forme en fonction du temps t (ms), des signaux reçus à la suite de l'injection de l'énergie vibratoire transitoire.
La **Figure 5** illustre un exemple de la forme en fonction du temps t (ms), des signaux d'excitation de référence correspondants aux signaux reçus illustré à la **Fig. 4** et retournés temporellement.
La **Figure 6** illustre de manière schématique, le cheminement des signaux lors d'une deuxième phase d'apprentissage du procédé conforme à l'invention.
La **Figure 7** illustre un exemple de la forme en fonction du temps t (ms), des signaux de réponse de référence.
La **Figure 8** illustre de manière schématique, le cheminement des signaux lors d'une phase de contrôle de la structure.
La **Figure 9** illustre un exemple de la forme en fonction du temps t (ms), des signaux divergents obtenus dans la phase de contrôle.

L'objet de l'invention concerne une méthode **1** de mise en oeuvre pour contrôler par ondes vibratoires, des structures mécaniques en vue de déceler des changements d'états locaux et/ou des défauts locaux susceptibles d'apparaître sur de telles structures mécaniques. Le procédé selon l'invention peut ainsi détecter par exemple en tant que défauts, des fissures, des ruptures, des amas, ... et en tant que changements d'états, des dépôts de matière comme du givre, des matériaux pulvérulents colmatés ... .

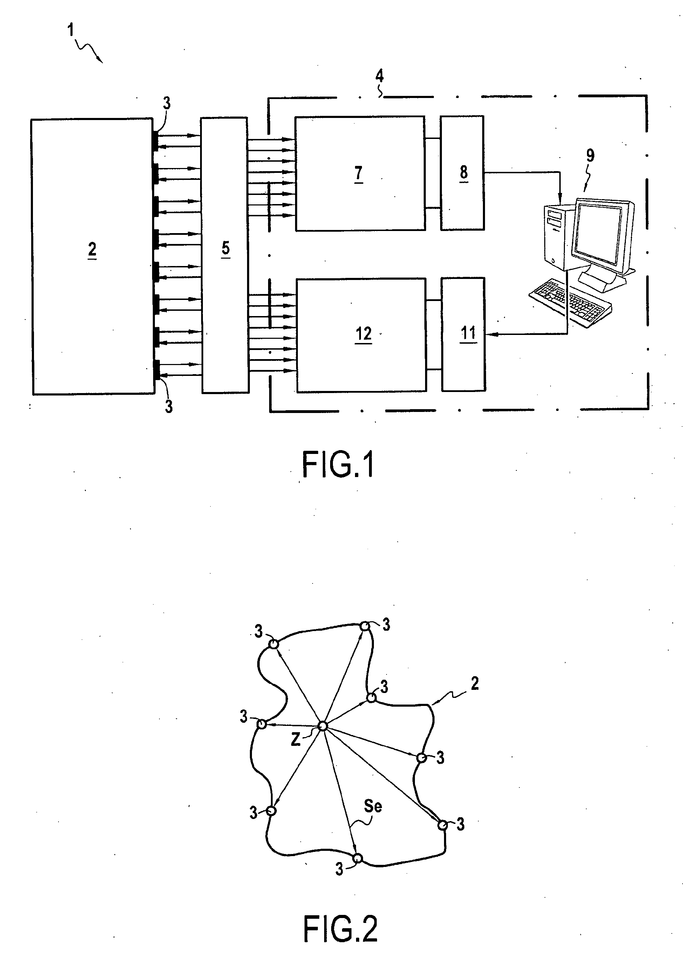

Tel que cela ressort de la **Fig. 1**, le dispositif **1** de mise en oeuvre du procédé selon l'invention vise le contrôle d'une structure mécanique **2** au sens général. Le dispositif **1** comporte une série de transducteurs **3** adaptés pour émettre et capter des ondes vibratoires dans la structure **2**. Ces transducteurs **3** sont reliés à une unité de commande et de traitement **4**.

Selon une variante avantageuse de réalisation, chaque transducteur **3** émet et capte des ondes vibratoires. Selon cette variante préférée de mise en oeuvre, les transducteurs **3** sont reliés au système de commande et de traitement **4** via un étage de commutation **5** de sorte que les transducteurs fonctionnent soit en mode émission, soit en mode captation. Selon une variante préférée de réalisation, les transducteurs **3** sont des accéléromètres.

Le système de commande et de traitement **4** comporte un convertisseur de charge **7** relié aux transducteurs **3** via l'étage de commutation **5**. Le convertisseur de charge **7** qui permet de mesurer la réponse des transducteurs en mode réception est relié, via un convertisseur analogique numérique **8**, à une unité de contrôle et de traitement **9** telle qu'un ordinateur.

Cette unité de contrôle et de traitement **9** est apte à piloter les transducteurs **3** en mode émission. A cet égard, l'unité de contrôle et de traitement **9** est reliée via un convertisseur numérique analogique **11**, à un étage d'amplification **12** qui attaque via l'étage de commutation **5**, les transducteurs **3**.

L'unité de contrôle et de traitement **9** comporte des moyens logiciels permettant la mise en oeuvre du procédé de contrôle conforme à l'invention.

Le principe du procédé de contrôle selon l'invention repose sur le fait qu'un défaut localisé ou un changement d'état localisé de la structure **2** conduit nécessairement à une perturbation locale de la propagation des ondes vibratoires à proximité d'un tel défaut. L'invention s'appuie donc sur une logique de convergence ou de focalisation des ondes vibratoires dans une zone d'inspection de la structure **2** et d'analyse de la divergence de ces ondes vibratoires dans la structure **2** après leur focalisation. Le procédé selon l'invention comporte une double phase d'apprentissage suivie par une phase de contrôle de la structure mécanique **2.**

Dans une première phase d'apprentissage, le procédé consiste à définir une zone d'inspection **Z** de la structure mécanique **2.** Cette zone d'inspection correspond à une zone potentielle localisée d'apparition de défauts et/ou de changements d'états de la structure **2**. De façon pratique, il est généralement connu les zones à risques potentielles nécessitant la mise en place d'un contrôle pour surveiller l'apparition de défauts et/ou de changements d'états pour une structure en exploitation telle que par exemple un ouvrage d'art.

De même, dans le cas du contrôle en fin de fabrication d'une structure **2**, la zone d'inspection **Z** peut correspondre à une zone spécifique à contrôler.

Le procédé selon l'invention consiste, comme illustré à la **Fig. 2**, à injecter une excitation vibratoire transitoire **Ex** dans la zone d'inspection **Z** de la structure **2**. Le procédé vise ainsi à injecter de façon limitée dans le temps et de manière artificielle, une énergie vibratoire dans la structure **2** à proximité de la zone susceptible de présenter ultérieurement un défaut et/ou un changement d'état.

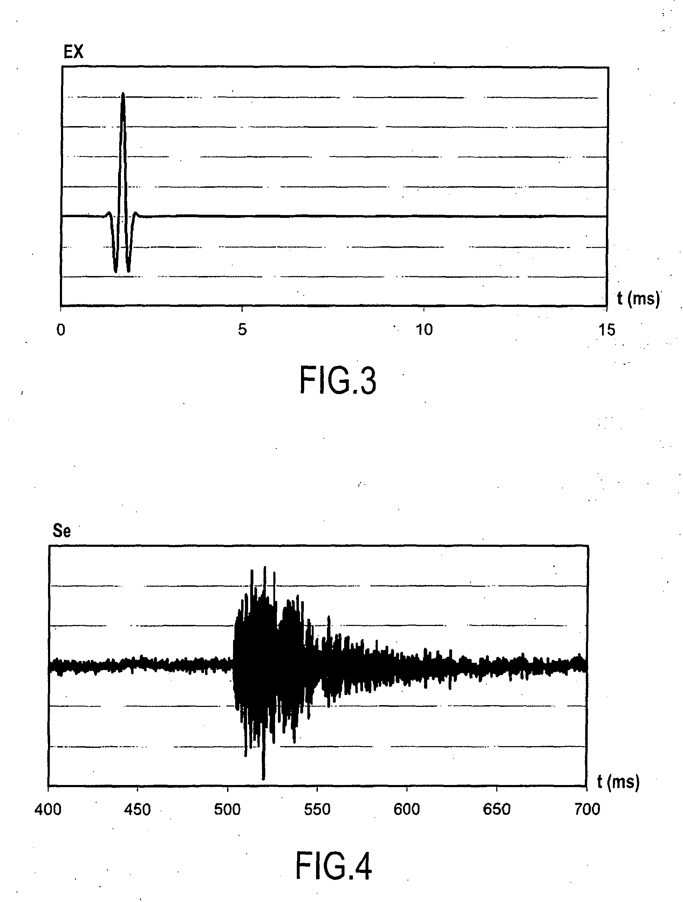

A cet égard, le dispositif **1** comporte un système d'injection d'une excitation vibratoire transitoire **Ex** dans la zone d'inspection **Z** de la structure **2**. Cette excitation vibratoire correspond à une sollicitation dynamique et plus précisément à une sollicitation mécanique transitoire appliquée à la structure **2** à l'aide d'un moyen d'excitation artificielle. Le dispositif **1** comporte ainsi un système d'injection d'une sollicitation mécanique transitoire dans la zone d'inspection **Z** de la structure **2**. Par exemple, un tel système d'injection vise à réaliser un impact mécanique en tant qu'excitation vibratoire transitoire. Une autre variante de réalisation consiste à injecter l'excitation vibratoire transitoire **Ex** à l'aide d'un transducteur placé temporairement dans la zone d'inspection **Z**. Avantageusement, un signal de type ondelette est appliqué au transducteur placé de façon temporaire dans la zone d'inspection **Z**. La **Fig. 3** illustre un exemple d'excitation vibratoire transitoire injectée dans la zone d'inspection **Z**.

Le procédé selon l'invention consiste à capter à l'aide des transducteurs **3**, les signaux **Se** reçus à la suite de l'injection de l'excitation transitoire vibratoire **Ex**. A cet effet, les transducteurs **3** sont disposés en différents endroits de la structure **2** pour récupérer les signaux **Se** reçus à la suite de l'injection dans la zone d'inspection **Z**, de l'excitation vibratoire transitoire. La **Fig. 4** illustre un exemple de la forme des signaux reçus **Se** à la suite de l'injection de l'énergie vibratoire transitoire **Ex**.

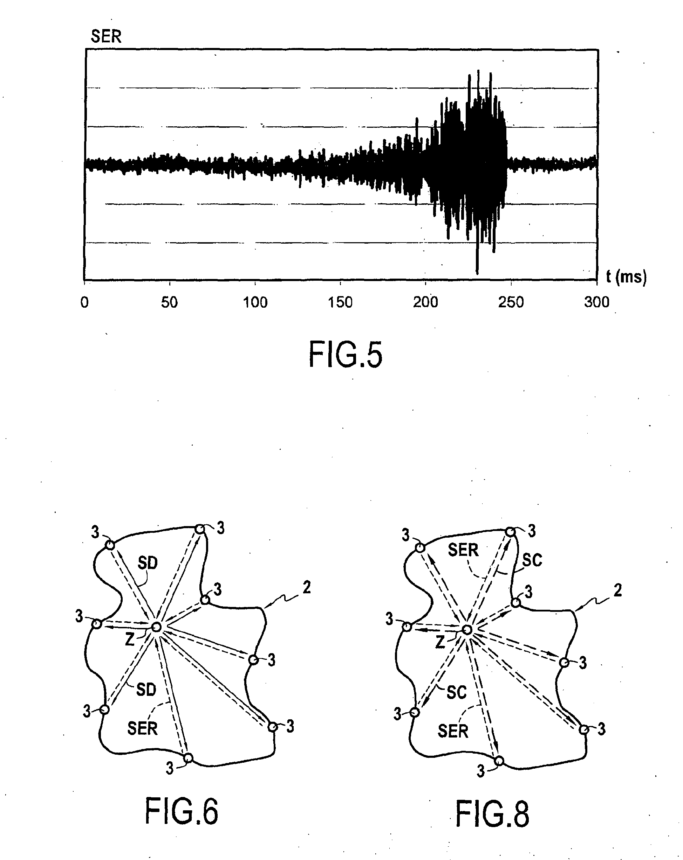

Le procédé selon l'invention consiste à retourner temporellement les signaux reçus **Se** qui sont enregistrés dans des moyens de mémorisation associés à l'unité de contrôle et de traitement **9**. La **Fig. 5** illustre un exemple de la forme des signaux d'excitation de référence **SER** correspondants aux signaux reçus **Se** retournés temporellement.

Cette première phase d'apprentissage permet ainsi de constituer un jeu de signaux d'excitation de référence **SER** pour la localisation de défauts et/ou de changements d'état à partir d'une position présumée d'apparition de défauts et/ou de changements d'état.

Bien entendu, il peut être prévu de recommencer cette première phase d'apprentissage pour différentes zones d'inspection **Z** de manière à obtenir pour chaque zone d'inspection **Z**, un jeu de signaux d'excitation de référence **SER**. Comme explicité ci-dessus, une excitation vibratoire transitoire **Ex** est injectée dans chacune des zones d'inspection **Z** choisies, à proximité de la zone susceptible de présenter ultérieurement un défaut et/ou un changement d'état. A partir d'un ensemble de positions présumées d'apparition de défauts et/ou de changements d'états, cette première phase d'apprentissage conduit à l'obtention de différents jeux de signaux d'excitation de référence **SER**.

Le procédé selon l'invention consiste dans une seconde phase d'apprentissage, à émettre simultanément les signaux d'excitation de référence **SER** en vue d'assurer leur focalisation dans la zone d'inspection **Z** supposée sans défaut et/ou sans changement d'état. L'émission simultanée des signaux d'excitation de référence **SER** est réalisée, comme illustré à la **Fig. 6**, par les transducteurs **3** ayant reçus les signaux **Se** à la suite de l'injection de l'excitation transitoire vibratoire.

Le procédé selon l'invention consiste à capter en différents endroits de la structure **2** réputée saine, les signaux divergents **SD** obtenus après la focalisation des signaux d'excitation de référence **SER**. Les signaux divergents **SD** sont captés par l'intermédiaire des transducteurs **3** identiques ou différents de ceux ayant participés à l'émission des signaux d'excitation de référence.

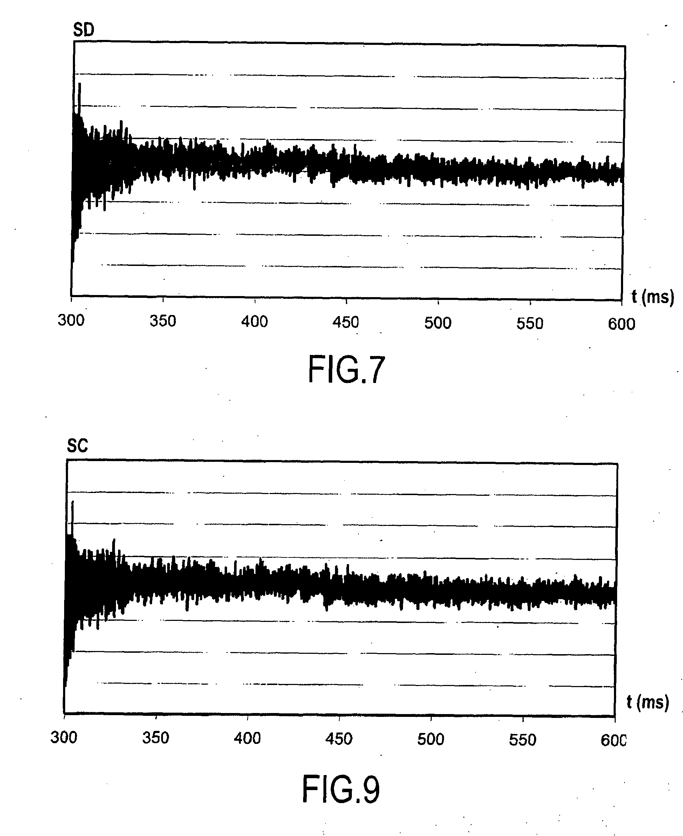

Les signaux divergents obtenus après la focalisation des signaux retournés temporellement sont mémorisés afin de constituer des signaux de réponse de référence **SD**. La **Fig. 7** illustre un exemple de la forme des signaux de réponse de référence **SD**.

Il doit être compris que les techniques de retournement temporel des ondes vibratoires offrent des possibilités de focalisation d'énergie en des endroits particuliers de la structure **2**. Ainsi, après retournement dans le temps des signaux mesurés par les transducteurs lors de la première phase d'apprentissage, la deuxième phase d'apprentissage vise à réémettre ces signaux retournés temporellement pour focaliser l'énergie dans une zone où elle a été injectée initialement. L'invention vise à observer ce qui se passe en phase de divergence c'est-à-dire après l'instant de focalisation de l'énergie, cette énergie concentrée se redéployant au sein de la structure **2** au cours de la divergence des signaux.

Le procédé selon l'invention consiste à mettre en place une phase de contrôle de la structure **2**.

Selon une première catégorie d'application, la structure **2** utilisée dans la phase de contrôle correspond à la structure utilisée lors des première et deuxième phase d'apprentissage. Avantageusement, de telles structures correspondent à des structures devant être surveillées en exploitation.

Selon une deuxième catégorie d'application de l'invention, la structure **2** à contrôler est différente de la structure **2** utilisée pendant les phases d'apprentissage. Cette catégorie d'application concerne le contrôle qualité visant la recherche localisée de défauts sur des structures en fin de fabrication. Selon cette application, la structure **2** utilisée lors des phases d'apprentissage est une structure **2** de référence exempte de défauts et/ou de changements d'états et analogue aux structures utilisées dans la phase de contrôle.

Le procédé selon l'invention consiste dans la phase de contrôle de la structure **2**, à émettre les signaux d'excitation de référence **SER** en vue d'assurer leur focalisation dans la zone d'inspection **Z** de la structure **2**. Tel que cela ressort plus précisément de la **Fig. 8**, des transducteurs **3** sont placés sur la structure à contrôler **2,** pour assurer la focalisation des signaux **SER** dans la zone à contrôler **Z**.

Le procédé selon l'invention consiste à capter à l'aide des transducteurs **3**, les signaux divergents **SC** obtenus après la focalisation des signaux d'excitation de référence **SER**. La **Fig. 9** illustre un exemple de la forme des signaux divergents **SC** obtenus après la focalisation des signaux d'excitation de référence **SER**.

Le procédé selon l'invention consiste ensuite à comparer les signaux divergents **SC** avec les signaux de réponse de référence **SD**, afin de déceler la présence ou non de changements d'état et/ou de défauts locaux dans la zone d'inspection de la structure **2**. Sauf cas particulier, les différences entre les signaux divergents **SC** et les signaux de réponse de référence **SD** portant l'information d'une éventuelle présence de changement d'état et/ou de défaut local, seront minimes.

Selon une variante avantageuse de réalisation, le procédé consiste à réémettre dans la structure **2** à contrôler et de manière périodique, les signaux d'excitation de référence **SER**. A chaque rémission, les signaux divergents **SC** sont captés pour être comparés aux signaux de réponse de référence **SD**. Cette réémission périodique des signaux permet de surveiller dans le temps une structure **2** comme par exemple une structure en cours d'exploitation.

Il est à noter que dans le cas du contrôle en fin de fabrication d'une structure **2**, plusieurs émissions de signaux d'excitation de référence **SER** peuvent être aussi envisagées.

Le procédé selon l'invention vise à mettre en oeuvre différentes techniques de comparaison des signaux divergents **SC** avec les signaux de réponse de référence **SD** afin de déceler la présence ou non de changements d'état ou de défauts dans la zone d'inspection **Z** de la structure **2**.

Par exemple, il peut être envisagé de comparer les signaux divergents **SC** et les signaux de réponse de référence **SD** par une méthode d'intercorrélation temporelle ou en procédant à une moyenne spectrale et/ou temporelle.

Selon une autre variante de réalisation, il peut être prévu de comparer les signaux divergents **SC** avec les signaux de réponse de référence **SD** en calculant la norme de la différence entre de tels signaux.

Des critères sont définis dans ces méthodes pour mettre en évidence les défauts et/ou les changements d'états. Ces critères sont à adapter au cas par cas en fonction des applications visées. De façon avantageuse, mais non limitative, un suivi de tendance opéré sur quelques paramètres descripteurs des fonctions d'intercorrélation entre les signaux divergents **SC** et les signaux de réponse de référence **SD**, ou bien de la norme de la différence entre ces mêmes signaux, pourra mettre en évidence une évolution de l'état de la structure par rapport à son état de référence.

Il découle de la description qui précède que le procédé selon l'invention permet d'inspecter des structures mécaniques complexes et étendues, en raison d'une pré-connaissance des zones potentielles d'apparition des défauts et/ou de changement d'états. Après la réalisation des deux phases d'apprentissage, la phase de contrôle est réalisée par la génération automatique ou à la demande, des signaux d'excitation de référence qui se focalisent dans l'une ou l'ensemble des zones à surveiller de la structure. Après focalisation des signaux, les signaux divergents sont analysés de manière automatique et comparés à une situation de référence. Une alarme peut être émise dans le cas de la détection d'un défaut et/ou d'un changement d'état. La zone où se trouve le défaut et/ou le changement d'état peut être visualisée à l'aide de l'unité de contrôle et de traitement **9**.

Cette unité de contrôle et de traitement **9** comporte des moyens logiciels permettant la mise en oeuvre du procédé selon l'invention.

Ainsi, l'unité de contrôle et de traitement **9** comporte :
- des moyens pour piloter des transducteurs **3** afin qu'ils captent les signaux reçus à la suite de l'injection de l'excitation vibratoire transitoire **EX**,
- des moyens pour retourner temporellement les signaux reçus **SE** à la suite de l'injection de l'excitation vibratoire transitoire pour constituer des signaux d'excitation de référence **SER**,
- des moyens pour piloter des transducteurs **3** afin qu'ils émettent des signaux d'excitation de référence qui sont focalisés dans la zone d'inspection,
- des moyens pour piloter des transducteurs **3** afin qu'ils captent les signaux divergents obtenus après la focalisation des signaux d'excitation de référence, en vue de constituer des signaux de réponse de référence **SD**,
- des moyens pour mémoriser les signaux d'excitation de référence **SER** et les signaux de réponse de référence **SD**,
- des moyens pour piloter les transducteurs **3** afin qu'ils captent, pendant la phase de contrôle, les signaux divergents **SC** obtenus après la focalisation des signaux d'excitation de référence **SER**,
- et des moyens de comparaison entre les signaux de réponse de référence **SD** et les signaux divergents **SC** obtenus après la focalisation des signaux d'excitation de référence **SER** afin de déceler la présence ou non de changements d'états et/ou de défauts locaux.

## Revendications

1. Procédé de contrôle non destructif de structures mécaniques (**2**) par ondes vibratoires, en vue de déceler des changements d'états et/ou de défauts locaux, **caractérisé en ce qu'**il comporte :
- une première phase d'apprentissage dans laquelle :
- on définit une zone d'inspection (**Z**) d'une structure mécanique à contrôler (**2**),
- on injecte une excitation vibratoire transitoire (**Ex**) dans la zone d'inspection (**Z**),
- on capte en différents endroits de la structure mécanique (**2.**), les signaux reçus (**Se**) à la suite de l'injection de l'excitation vibratoire transitoire,
- on retourne temporellement les signaux reçus (**Se**), et on mémorise les signaux retournés temporellement afin de constituer des signaux d'excitation de référence (**SER**),
- une seconde phase d'apprentissage dans laquelle :
- on émet simultanément, les signaux d'excitation de référence (**SER**) en vue d'assurer leur focalisation dans la zone d'inspection (**Z**),
- on capte en différents endroits de la structure mécanique (**2**), les signaux divergents obtenus après la focalisation des signaux d'excitation de référence et on mémorise lesdits signaux divergents afin de constituer des signaux de réponse de référence (**SD**),
- une phase de contrôle de la structure mécanique (**2**) dans laquelle :
. on émet les signaux d'excitation de référence (**SER**) en vue d'assurer leur focalisation dans la zone d'inspection (**Z**) de la structure mécanique (**2**),
. on capte les signaux divergents (**SC**) obtenus après la focalisation des signaux d'excitation de référence (**SER**),
. on compare les signaux divergents (**SC**) avec les signaux de réponse de référence (**SD**) afin de déceler la présence ou non de changements d'états et/ou de défauts locaux dans la zone d'inspection (**Z**) de la structure mécanique (**2**).

2. Procédé selon la revendication 1, **caractérisé en ce qu'**il consiste à utiliser les mêmes structures mécaniques à contrôler (**2**) lors des phases d'apprentissage et de contrôle.

3. Procédé selon les revendications 1 et 2, **caractérisé en ce qu'**il consiste pour la phase de contrôle, à réémettre dans structure mécanique à contrôler (**2**), de manière périodique, les signaux d'excitation de référence (**SER**).

4. Procédé selon la revendication 1, **caractérisé en ce qu'**il consiste pour les phases d'apprentissage, à utiliser une structure mécanique de référence exempte de changements d'états et/ou de défauts locaux, analogue aux structures mécaniques à contrôler (**2**) lors de la phase de contrôle.

5. Procédé selon la revendication 1, **caractérisé en ce qu'**il consiste à renouveler la première phase d'apprentissage, pour différentes zones (**Z**) de la structure mécanique (**2**), de manière à constituer différents jeux de signaux d'excitation de référence (**SER**) correspondant chacun à une zone d'inspection.

6. Procédé selon la revendication 1, **caractérisé en ce qu'**il consiste à comparer par intercorrélation et par moyenne, les signaux divergents (**SC**) avec les signaux de réponse de référence (**SD**).

7. Procédé selon la revendication 1, **caractérisé en ce qu'**il consiste à comparer les signaux divergents (**SC**) avec les signaux de réponse de référence (**SD**) en calculant la norme de la différence entre ces signaux.

8. Procédé selon la revendication 1, **caractérisé en ce qu'**il consiste à émettre les signaux d'excitation de référence (**SD**) et à capter les signaux divergents (**SC**) à l'aide des mêmes transducteurs (**3**).

9. Procédé selon la revendication 1, **caractérisé en ce qu'**il consiste à réaliser un impact mécanique en tant qu'excitation vibratoire transitoire (**Ex**)

10. Procédé selon la revendication 1, **caractérisé en ce qu'**il consiste à injecter une excitation vibratoire transitoire (**Ex**) à l'aide d'un transducteur placé temporairement dans la zone d'inspection (**Z**).

11. Procédé selon la revendication 10, **caractérisé en ce qu'**il consiste à appliquer un signal de type ondelette, au transducteur placé de façon temporaire dans la zone d'inspection (**Z**).

## Patentansprüche

1. Verfahren zur zerstörungsfreien Kontrolle von mechanischen Strukturen (2) durch Schwingungswellen, um Zustandsänderungen und/oder lokale Fehler zu erkennen, **dadurch gekennzeichnet, dass** es umfasst:
- eine erste Lernphase, in der:
- eine Prüfzone (Z) einer zu kontrollierenden mechanischen Struktur (2) definiert wird,
- eine transitorische Schwingungserregung (Ex) in die Prüfzone (Z) eingeleitet wird,
- an verschiedenen Stellen der mechanischen Struktur (2) die nach der Einleitung der transitorischen Schwingungserregung empfangenen Signale (Se) erfasst werden,
- die empfangenen Signale (Se) zeitlich umgekehrt werden, und die zeitlich umgekehrten Signale gespeichert werden, um Referenzerregungssignale (SER) zu bilden,
- eine zweite Lernphase, in der:
- gleichzeitig die Referenzerregungssignale (SER) entsandt werden, um ihre Fokussierung in der Prüfzone (Z) zu gewährleisten,
- an verschiedenen Stellen der mechanischen Struktur (2) die divergierenden Signale, die nach der Fokussierung der Referenzerregungssignale erhalten werden, erfasst werden, und die divergierenden Signale gespeichert werden, um Referenzantwortsignale (SD) zu bilden,
- eine Kontrollphase der mechanischen Struktur (2), in der:
- die Referenzerregungssignale (SER) im Hinblick auf ihre Fokussierung in der Prüfzone (Z) der mechanischen Struktur (2) entsandt werden,
- die divergierenden Signale (SC), die nach der Fokussierung der Referenzerregungssignale (SER) erhalten werden, erfasst werden,
- die divergierenden Signale (SC) mit den Referenzantwortsignalen (SD) verglichen werden, um das Vorhandensein oder Nichtvorhandensein von Zustandsänderungen und/oder lokalen Fehlern in der Prüfzone (Z) der mechanischen Struktur (2) zu erkennen.

2. Verfahren nach Anspruch 1, **dadurch gekennzeichnet, dass** es darin besteht, dieselben zu kontrollierenden mechanischen Strukturen (2) während der Lern- und Kontrollphasen zu verwenden.

3. Verfahren nach den Ansprüchen 1 und 2, **dadurch gekennzeichnet, dass** es für die Kontrollphase darin besteht, in der zu kontrollierenden mechanischen Struktur (2) auf periodische Weise die Referenzerregungssignale (SER) wieder zu entsenden.

4. Verfahren nach Anspruch 1, **dadurch gekennzeichnet, dass** es für die Lernphasen darin besteht, eine mechanische Referenzstruktur frei von Zustandsänderungen und/oder lokalen Fehlern analog zu den zu kontrollierenden mechanischen Strukturen (2) in der Kontrollphase zu verwenden.

5. Verfahren nach Anspruch 1, **dadurch gekennzeichnet, dass** es darin besteht, die erste Lernphase für verschiedene Zonen (Z) der mechanischen Struktur (2) zu erneuern, um verschiedene Sätze von Referenzerregungssignalen (SER) jeweils entsprechend einer Prüfzone darzustellen.

6. Verfahren nach Anspruch 1, **dadurch gekennzeichnet, dass** es darin besteht, durch Interkorrelation und Durchschnitt die divergierenden Signale (SC) mit den Referenzantwortsignalen (SD) zu vergleichen.

7. Verfahren nach Anspruch 1, **dadurch gekennzeichnet, dass** es darin besteht, die divergierenden Signale (SC) mit den Referenzantwortsignalen (SD) zu vergleichen, wobei die Norm der Differenz zwischen diesen Signalen berechnet wird.

8. Verfahren nach Anspruch 1, **dadurch gekennzeichnet, dass** es darin besteht, die Referenzerregungssignale (SD) zu entsenden und die divergierenden Signale (SC) mit Hilfe derselben Messwertgeber (3) zu erfassen.

9. Verfahren nach Anspruch 1, **dadurch gekennzeichnet, dass** es darin besteht, einen mechanischen Schlag als transitorische Schwingungserregung (Ex) durchzuführen.

10. Verfahren nach Anspruch 1, **dadurch gekennzeichnet, dass** es darin besteht, eine transitorische Schwingungserregung (Ex) mit Hilfe eines Messwertgebers, der temporär in der Prüfzone (Z) angeordnet ist, einzuleiten.

11. Verfahren nach Anspruch 10, **dadurch gekennzeichnet, dass** es darin besteht, ein Signal des Typs Wavelet an den Messwertgeber, der temporär in der Prüfzone (Z) angeordnet ist, anzulegen.

## Claims

1. A method of non-destruction inspection of mechanical structures (2) with vibratory waves for the purpose of detecting local defects and/or changes of state, the method being **characterized in that** it comprises:
- a first training stage, comprising:
- defining an inspection zone (Z) of a mechanical structure (2) for inspection;
- infecting a transient vibratory excitation (Ex) into the inspection zone (Z);
- picking up, at different locations of the mechanical structure (2), the received signals (Se) that are received as a result of infecting the transient vibratory excitation; and
- time reversing the received signals (Se) and storing the time-reversed, signals in order to constitute reference excitation signals (SER);
- a second training stage, comprising:
- simultaneously emitting the reference excitation signals (SER) in order to focus them in the inspection zone (Z); and
- picking up, at different locations of the mechanical structure (2), the diverging signals obtained after focusing the reference excitation signals, and storing said diverging signals in order to constitute reference response signals (SD) ; and
- a stage of inspecting the mechanical structure (2), comprising:
· emitting the reference excitation signals (SER) in order to focus them in the inspection zone (Z) of the mechanical structure (2);
· picking up the diverging signals (SC) obtained after the reference excitation signals (SER) have been focused; and
· comparing the diverging signals (SC) with the reference response signals (SD) in order to detect the presence or absence of local defects and/or changes of state in the inspection zone (Z) of the mechanical structure (2).

2. A method according to claim 1, **characterized in that** it consists in using the same mechanical structures (2) for inspection during the training stages and during the inspection stage.

3. A method according to claims 1 and 2, **characterized in that** it consists, in the inspection stage, in re-emitting the reference excitation signals (SER) periodically into the mechanical structure (2) for inspection.

4. A method according to claim 1, **characterized in that** it consists, for the training stages, in using a reference mechanical structure free from local defects and/or changes of state and analogous to the mechanical structures (2) for inspection during the inspection stage.

5. A method according to claim 1, **characterized in that** it consists in renewing the first training stage for different zones (Z) of the mechanical structure (2) in order to constitute different sets of reference excitation signals (SER), each corresponding to a respective inspection zone.

6. A method according to claim 1, **characterized in that** it consists in comparing the diverging signals (SC) with the reference response signals (SD) by cross-correlation and by averaging.

7. A method according to claim 1, **characterized in that** it consists in comparing the diverging signals (SC) with the reference response signals (SD) by calculating the norms of the differences between these signals.

8. A method according to claim 1, **characterized in that** it consists in emitting reference excitation signals (SD) and in picking up the diverging signals (SC) by means of the same transducers (3).

9. A method according to claim 1, **characterized in that** it consists in impacting a mechanical impact as a transient vibratory excitation (Ex).

10. A method according to claim 1, **characterized in that** it consists in injecting a transient vibratory excitation (Ex) using a transducer that is placed temporarily in the inspection zone (Z).

11. A method according to claim 10, **characterized in that** it consists in applying a wavelet type signal to the transducer placed temporarily in the inspection zone (Z).
